# FASCICULE DE BREVET EUROPEEN

(11) **EP 1 473 554 B1**
(45) Date de publication et mention de la délivrance du brevet: **19.09.2007**
(21) Numéro de dépôt: 04291065.3
(22) Date de dépôt: 23.04.2004
(51) Int. Cl.: G01K 1/02, A47J 43/28

(54) **Ustensile de cuisine et procédé et dispositif d'asservissement de moyens de chauffage d'un appareil de cuisson**
Kochgeschirr und Verfahren und Vorrichtung zur Regelung der Heizmitteln einer Kochapparat
Cooking utensil and method and device for controlling the heating means of a cooking device

(30) Priorité: 29.04.2003 FR 0305282
(43) Date de publication de la demande: 03.11.2004
(73) Titulaire: Brandt Industries, 92500 Rueil Malmaison (FR)
(72) Inventeur: Cornec, René, 45380 La Chapelle St Mesmin (FR); Rigolle, Thibaut, 45800 Saint Jean De Braye (FR)
(74) Mandataire: Stankoff, Hélène

(56) Documents cités:
- EP-A- 0 961 191
- DE-A- 10 065 706
- US-A- 5 410 129
- PATENT ABSTRACTS OF JAPAN vol. 1996, no. 05, 31 mai 1996 (1996-05-31) -& JP 08 010151 A (TOKYO GAS CO LTD), 16 janvier 1996 (1996-01-16)

## Description

La présente invention concerne un ustensile de cuisine destiné à être introduit dans un récipient de cuisson et comportant des moyens de mesure de température.

Elle concerne également un procédé et un dispositif d'asservissement de moyens de chauffage d'un appareil de cuisson adapté à coopérer avec un ustensile de cuisine conforme à la présente invention.

La présente invention concerne de manière générale le domaine des appareils de cuisson domestiques, et plus particulièrement les tables de cuisson électrique ou à gaz ayant des moyens de commande électronique des éléments chauffants.

Il est connu de mesurer la température d'un récipient de cuisson et d'asservir la puissance délivrée par les moyens de chauffage en fonction d'une valeur de consigne fournie par exemple par un utilisateur.

Un tel asservissement a déjà été réalisé à partir de différents moyens de mesure de la température. Ainsi le document FR 98 16658 décrit des capteurs de températures placés au centre d'un foyer de cuisson, sous un récipient de cuisson et adaptés ainsi à venir en contact avec la paroi externe de ce récipient. Cependant, ces capteurs mesurent une température perturbée par les moyens de chauffage, ne sont pas toujours en contact étroit avec le récipient posé sur le foyer de cuisson et ne permettent pas de connaître la température du contenu du récipient.

Il est également connu d'utiliser une thermopile qui déduit la température du récipient ou de son contenu grâce au rayonnement infrarouge émis par ces derniers.

Cependant de tels capteurs ne sont sensibles qu'à la température de surface du contenu du récipient et sont en outre fortement dépendant de l'émissivité de la surface observée.

Afin d'améliorer ces systèmes, il a été proposé dans les documents FR 82 19027 et FR 93 01143 d'utiliser un ustensile muni d'un capteur de température adapté à être plongé dans le contenu du récipient.

Dans tous les documents précités, une valeur de température mesurée est transmise à des moyens de régulation des éléments chauffants d'une table de cuisson pour permettre l'asservissement de la puissance délivrée par ces éléments chauffant en fonction de la comparaison de cette température mesurée et d'une valeur de consigne choisie par un utilisateur.

La présente invention a pour objet d'améliorer les systèmes décrits précédemment en mettant en oeuvre un ustensile de cuisine muni de moyens de mesure de la température permettant d'obtenir une maîtrise parfaite de la température du récipient et de son contenu.

A cet effet, elle vise selon un premier aspect un ustensile de cuisine destiné à être introduit dans un récipient de cuisson, comportant des moyens de mesure de température et des moyens de transmission d'une mesure de température à un dispositif d'asservissement de moyens de chauffage d'un appareil de cuisson.

Les moyens de mesure de température comprennent au moins deux capteurs de température, un premier capteur de température étant disposé à une extrémité de l'ustensile de cuisine adaptée à venir en contact avec le fond du récipient et un second capteur de température étant disposé à distance de cette extrémité.

Ainsi, l'ustensile de cuisine conforme à la présente invention permet de mesurer à la fois la température du fond du récipient et la température de son contenu. Il est ainsi possible d'utiliser ces deux valeurs dans la régulation des moyens de chauffage du récipient.

Selon un deuxième aspect de l'invention, elle concerne un procédé d'asservissement de moyens de chauffage d'un appareil de cuisson, les moyens de chauffage étant adaptés à chauffer le contenu d'un récipient de cuisson. Ce procédé d'asservissement comprend les étapes suivantes :
- réception d'une mesure de température du fond d'un récipient ;
- réception d'une mesure de température du contenu d'un récipient ;
- acquisition d'une température de consigne ; et
- régulation des moyens de chauffage en fonction de la température de consigne, de la mesure de température du fond d'un récipient, de la mesure de température du contenu d'un récipient et de la différence entre la température de fond du récipient et la température du contenu du récipient.

Ainsi, la régulation mise en oeuvre pour contrôler les moyens de chauffage utilise non seulement une mesure de température comparable à une valeur de consigne, comme cela est classiquement décrit dans l'état de la technique, mais également la différence existant entre la température du fond du récipient et la température de son contenu.

Cette régulation permet d'obtenir une maîtrise parfaite de la chauffe du récipient et notamment une cuisson sans brûler ni attacher le contenu au fond du récipient.

Selon une caractéristique préférée de l'invention, les moyens de chauffage sont contrôlés à partir de la régulation de la valeur de la température de fond du récipient à la valeur de consigne acquise et l'extinction des moyens de chauffage est commandée lorsque la différence entre la température de fond du récipient et la température du contenu du récipient est négative.

Ainsi, la régulation en fonction de la température de consigne est réalisée à partir de la valeur mesurée au fond du récipient, les moyens de chauffage étant coupés dès lors que la température du contenu dépasse la température du fond du récipient.

On obtient ainsi une régulation propre à obtenir une parfaite maîtrise à la fois de la température du fond du récipient et de son contenu, à une valeur de consigne prédéterminée.

Selon une autre caractéristique préférée de l'invention, lorsque la différence entre la température de fond du récipient et la température du contenu du récipient est supérieure à une valeur de seuil prédéterminée, une étape d'émission d'un signal d'avertissement est mise en oeuvre.

Lorsque au contraire la température du fond du récipient devient trop élevée par rapport à la température de son contenu, un signal d'avertissement permet d'alerter l'utilisateur qui devra mélanger le contenu du récipient afin d'homogénéiser sa température éviter ainsi tout attachement ou brûlure du contenu sur le fond du récipient.

Selon une autre caractéristique préférée de l'invention, le procédé d'asservissement comprend en outre une phase de montée en température du fond du récipient à la valeur de consigne acquise, cette phase de montée en température comportant une étape de réduction de la puissance des moyens de chauffage lorsque la différence entre la température de fond du récipient et la température du contenu du récipient est supérieure à une seconde valeur de seuil.

Le contrôle des moyens de chauffage est également mis en oeuvre lors de la phase de montée en température, autorisant une montée très rapide en température, à pleine puissance des éléments chauffants, tout en réduisant cette puissance uniquement en cas de surchauffe du fond du récipient par rapport à son contenu, afin d'éviter de brûler les aliments.

De préférence, la phase de montée en température comporte en outre une étape d'émission d'un signal d'avertissement lorsque la différence entre la température de fond du récipient et la température du contenu du récipient est supérieure à une troisième valeur de seuil.

Comme lors de la phase de régulation autour de la température de consigne, le signal d'avertissement permet d'alerter l'utilisateur sur la nécessité de mélanger le contenu du récipient.

Dans tous les cas, ce signal d'avertissement est de préférence un signal sonore.

Selon un troisième aspect de la présente invention, elle concerne un dispositif d'asservissement de moyens de chauffage d'un appareil de cuisson, adapté à coopérer avec un ustensile de cuisine conforme à l'invention.

Ce dispositif d'asservissement comprend des moyens de réception de mesures de température, des moyens d'acquisition d'une température de consigne et des moyens de régulation adaptés à contrôler les moyens de chauffage en fonction de la température de consigne, d'une mesure de température du fond d'un récipient, d'une mesure de température du contenu d'un récipient et de la différence entre la température de fond du récipient et la température du contenu du récipient.

Ce dispositif d'asservissement présente des avantages et des caractéristiques identiques à ceux décrits précédemment pour le procédé d'asservissement qu'il met en oeuvre.

Enfin, la présente invention vise une table de cuisson domestique à commande électronique des moyens de chauffage d'un récipient comprenant un dispositif d'asservissement conforme à l'invention.

D'autres particularités et avantages de l'invention apparaîtront encore dans la description ci-après.

Aux dessins annexés, donnés à titre d'exemples non limitatifs :
- la figure 1 illustre un ustensile de cuisine conforme à un premier mode de réalisation de l'invention ;
- la figure 2 schématise l'utilisation de l'ustensile de cuisine de la figure 1 dans un récipient de cuisson ;
- la figure 3 illustre un ustensile de cuisine conforme à un deuxième mode de réalisation de l'invention ;
- la figure 4 illustre un ustensile de cuisine conforme à un troisième mode de réalisation de l'invention ; et
- la figure 5 illustre une table de cuisson comprenant un dispositif d'asservissement de moyens de chauffage conforme à la présente invention.

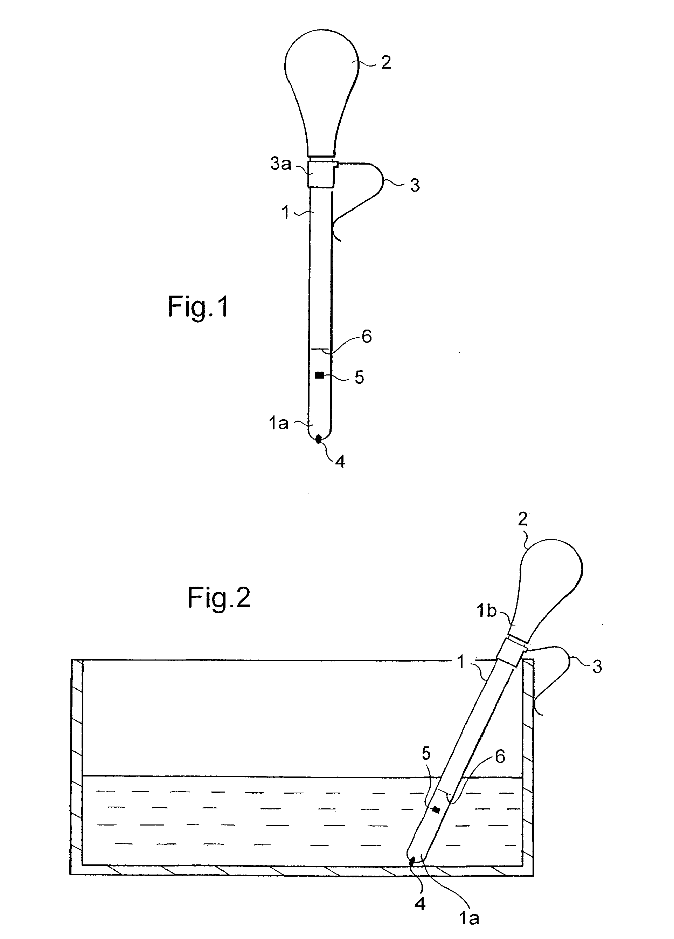

On va décrire tout d'abord en références aux figures 1 à 4 un ustensile de cuisine conforme à un premier aspect de l'invention.

Cet ustensile de cuisine est destiné à être plongé dans le contenu d'un récipient afin d'en surveiller la température lors de la cuisson d'un aliment dans ce récipient.

Cet ustensile de cuisine se présente sous la forme générale d'une tige rigide 1 servant de support aux différents éléments fonctionnels décrits ci-après.

Cette tige rigide 1 est réalisée préférentiellement en plastique résistant à des températures de l'ordre de 150°C.

Cette tige 1 forme ainsi un manche de préhension de l'ustensile permettant à l'utilisateur de manipuler celui-ci, et notamment de l'introduire dans un récipient.

Comme bien illustré à la figure 2, en fonctionnement, cet ustensile est destiné à avoir une première extrémité 1a introduite à l'intérieur du récipient de cuisson et une seconde extrémité 1b destinée à être maintenue au bout de la tige 1 en dehors du récipient.

Cette seconde extrémité 1b comporte des moyens d'émission 2 d'une mesure de température adaptés à coopérer avec un dispositif d'asservissement qui sera décrit ultérieurement.

De manière classique, ces moyens de transmission 2 d'une mesure de température sont des moyens de transmission sans fil fonctionnant dans le domaine de l'infrarouge, en radiofréquence ou en hyperfréquence.

Ces moyens de transmission 2 intègrent également de préférence des moyens de traitement des mesures de température, adaptés notamment à calculer périodiquement une valeur moyenne de température à partir d'une valeur continue mesurée par un capteur.

Ces moyens de traitement sont de préférence des moyens électroniques classiques utilisant un microprocesseur.

Comme bien illustré sur la figure 2, afin de permettre le maintien en position de l'ustensile de cuisine sur un récipient de cuisson, une bague ressort 3 est montée en coulissement grâce à une bague de coulissement 3a sur la tige 1.

Le positionnement de cette bague ressort 3 peut ainsi être ajusté le long de la tige 1 en fonction de la hauteur du récipient pour permettre de fixer cette tige 1 au bord du récipient.

Conformément à l'invention, cet ustensile de cuisine comporte deux capteurs de température.

Dans ce premier mode de réalisation, un premier capteur 4 est disposé à l'extrémité 1 a de l'ustensile de cuisine.

Comme illustré à la figure 2, cette extrémité 1a est adaptée à venir en contact le fond du récipient.

Ce capteur de température 4 est de préférence inséré dans un tube métallique alimentaire afin d'améliorer son temps de réponse.

Ce capteur de température 4 permet ainsi de mesurer de façon dynamique et rapide la température du fond du récipient.

Un second capteur de température 5 est disposé à distance de l'extrémité 1 a de la tige 1.

Ce capteur de température 5 est surmoulé dans la tige 1 et permet de mesurer une température moyenne d'un contenu du récipient de cuisson.

Pour cela, ce capteur de température est disposé dans une portion de la tige 1 adaptée à être immergée dans le contenu du récipient.

De préférence, une graduation schématisée par la référence 6 peut être prévue sur la tige 1 au-delà du second capteur de température 5 afin de permettre à l'utilisateur de vérifier visuellement l'immersion du second capteur de température 5 à l'intérieur du contenu du récipient.

Ces capteurs de température 4,5 sont préférentiellement des capteurs de type résistance CTN (à Coefficient de Température Négatif).

Cet ustensile de cuisine permet ainsi de mesurer simultanément la température du fond T4 du récipient et la température de son contenu T5.

Les moyens d'émission 2 sont adaptés, après traitement des valeurs mesurées par les capteurs 4, 5, d'adresser ces valeurs de température T4, T5 à un dispositif d'asservissement décrit ultérieurement.

Ces valeurs de température T4, T5 sont transmises de préférence de manière séquentielle dans une trame du type : Start T4 ; T5 stop.

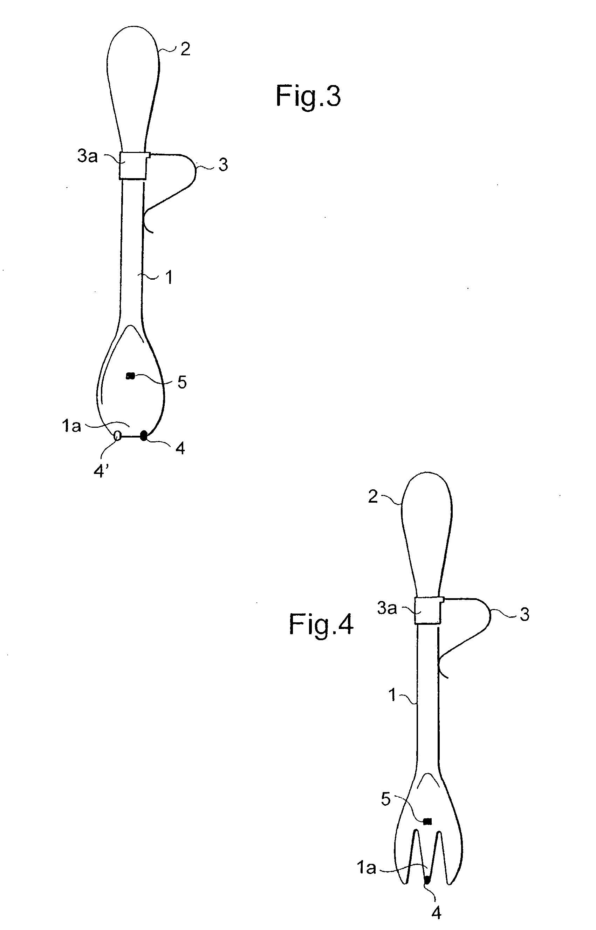

On va décrire à présent en référence aux figures 3 et 4 des formes plus communes d'ustensile de cuisine qui peuvent être mises en oeuvre pour l'ustensile décrit à la figure 1.

Les éléments communs à l'exemple décrit précédemment en référence à la figure 1 portent des références numériques identiques et ne seront pas redécrits en détail.

Comme illustré à la figure 3, cet ustensile de cuisine peut être constitué d'une cuillère.

Le premier capteur de température 4 est disposé à une extrémité 1 a de la cuillère adaptée à venir contact avec le fond du récipient.

Dans ce mode de réalisation, il existe deux pointes métalliques 4, 4' disposées à l'extrémité 1a de l'ustensile de cuisine.

Une première pointe 4 incorpore un capteur de température 4 et une seconde pointe 4' est destinée à équilibrer l'ustensile sur le fond du récipient.

Conformément à l'invention, un second capteur de température 5 est disposé entre l'extrémité 1a et le manche de la cuillère.

De préférence, ce second capteur de température 5 est surmoulé dans la partie bombée de la cuillère.

Afin de s'assurer que ce second capteur 5 est également immergé dans le contenu du récipient, une graduation 6 peut être prévue sur la tige 1, par exemple au niveau de la jonction du manche 1 et de la partie bombée de la cuillère.

La figure 4 illustre enfin un troisième mode de réalisation de l'invention dans lequel l'ustensile de cuisine est constitué d'une fourchette.

Un premier capteur de température 4 est disposé à une extrémité 1a d'une dent de la fourchette et un second capteur de température 5 est disposé entre cette extrémité 1 a et le manche 1 de la fourchette.

Bien entendu, l'invention n'est pas limitée à ces formes d'ustensile de cuisine.

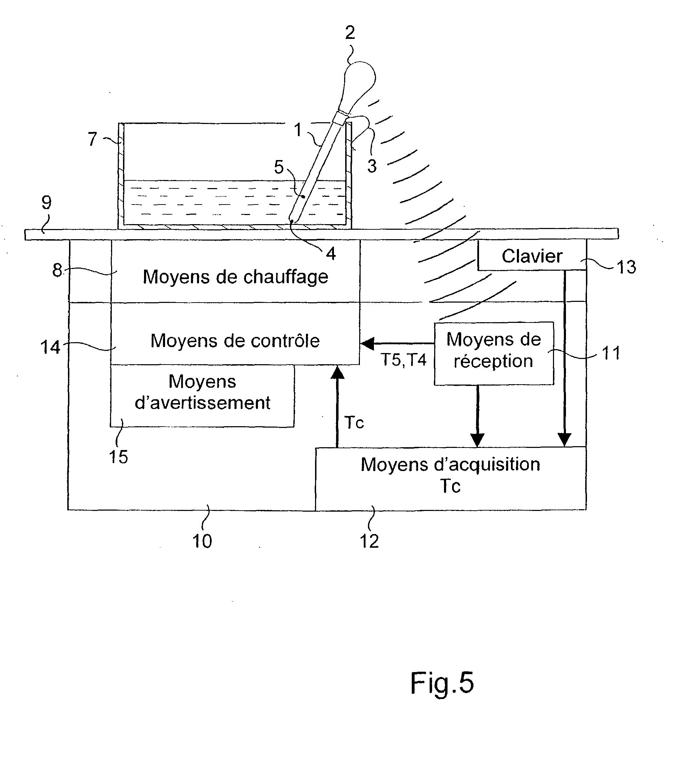

On va décrire à présent en référence à la figure 5 un système d'asservissement des moyens chauffage d'un appareil de cuisson.

Ce système d'asservissement comporte de manière générale un ustensile de cuisine tel que décrit précédemment destiné à être introduit dans un récipient de cuisson 7.

Ce récipient de cuisson 7 est adapté à être chauffé par des moyens de chauffage 8 d'un appareil de cuisson 9.

Le système d'asservissement comprend également, coopérant avec l'ustensile de cuisine, un dispositif d'asservissement 10.

Ce dispositif d'asservissement associé à l'appareil de cuisson 9 comprend tout d'abord des moyens de réception 11 de mesures de température.

Ces moyens de réception 11 coopèrent avec les moyens de transmission 2 de l'ustensile de cuisine et sont ainsi adaptés à réceptionner des valeurs de température représentant la température du contenu du récipient et la température du fond du récipient.

A partir de la trame émise par les moyens de transmission telle que décrite précédemment à titre d'exemple, les moyens de réception 11 peuvent extraire successivement la valeur de la température de fond T4, puis la valeur de température de contenu T5.

En fonction des moyens de transmission 2, ces moyens de réception peuvent également être des moyens de réception sans fil, fonctionnant dans l'infrarouge, en radiofréquence ou en hyperfréquence.

On notera bien entendu que ces moyens de réception 11 et ces moyens de transmission 2 peuvent être des moyens de transmission filaires.

Ce dispositif d'asservissement 10 comporte également des moyens d'acquisition 12 d'une température de consigne Tc.

Ces moyens d'acquisition 12 d'une température de consigne sont adaptés à coopérer avec un clavier 13 formant une interface avec l'utilisateur.

L'utilisateur peut ainsi de manière classique fixer une température de consigne à l'appareil de cuisson, à l'aide du clavier 13. Il peut également alternativement sélectionner une fonction culinaire du type "réchauffer", "bouillir", "frire"...

A chaque fonction culinaire peut être associée une valeur de consigne prédéterminée.

Cette valeur de consigne Tc acquise par les moyens d'acquisition 12, et les valeurs de température reçues par les moyens de réception 11 (notées T4 pour la valeur mesurée par un premier capteur 4 et T5 pour la valeur mesurée par un second capteur 5) sont transmises à des moyens de contrôle 14 adaptés à contrôler les moyens de chauffage 8.

Ces moyens de contrôle 14 et leur algorithme de régulation sont préférentiellement des systèmes à microprocesseur adaptés à mémoriser des programmes de régulation.

Ces moyens de contrôle 14, en dehors du type de régulation qu'ils mettent en oeuvre et qui sera décrit ultérieurement en référence au procédé d'asservissement conforme à la présente invention, sont utilisés de manière classique dans des tables de cuisson domestique à commande électronique des moyens de chauffage.

Conformément à l'invention, l'algorithme de régulation et de contrôle des moyens de chauffage 8 est une fonction non seulement de la température de consigne Tc, d'une mesure de température T4 du fond d'un récipient et d'une mesure de température T5 du contenu d'un récipient, mais également de la différence T4 - T5 calculée entre la température de fond T4 du récipient et la température du contenu T5 du récipient.

Ce dispositif d'asservissement 10 comprend en outre des moyens d'avertissement 15 commandés par les moyens de contrôle 14.

Ces moyens d'avertissement 15 sont constitués préférentiellement de moyens d'émission d'un signal sonore permettant ainsi d'émettre une alarme sonore notamment lorsque la différence entre la température du fond T4 du récipient et la température du contenu T5 du récipient est supérieure à une valeur de seuil prédéterminée.

Cette alarme sonore permet ainsi de signaler à l'utilisateur la nécessité de remuer le contenu afin d'homogénéiser la température de celui-ci et d'éviter tout attachement du contenu au fond du récipient.

On va décrire à présent le procédé d'asservissement mis en oeuvre par le dispositif d'asservissement 10 conforme à l'invention.

Ce procédé d'asservissement est mis en oeuvre à partir de la température de fond T4, de la température du contenu T5, de la différence de ces deux températures T4 -T5 et de la valeur de consigne Tc choisie.

On va décrire à présent des exemples de mise en oeuvre du procédé d'asservissement conforme à l'invention.

### Exemple 1 : fonction "bouillir" ou "réchauffer"

Lorsque la fonction "bouillir" est choisie par un utilisateur, une valeur de température de consigne Tc de l'ordre de 102°C est attribuée par les moyens d'acquisition 12.

Similairement, lorsque la fonction "réchauffer" est choisie, une valeur de consigne Tc de l'ordre de 80°C est attribuée par les moyens d'acquisition 12.

De manière classique, le procédé d'asservissement comporte tout d'abord une phase de montée en température, puis une phase de régulation.

Lors de la phase de montée en température, on ajuste la puissance des moyens de chauffage pour augmenter le plus rapidement possible la température du récipient et de son contenu à la température de consigne Tc.

En pratique, cette phase de montée en température est adaptée à monter la température du fond T4 du récipient à la valeur de consigne acquise Tc.

Ainsi, tant que la température du fond T4 est inférieure à la température de consigne Tc, la puissance délivrée par les moyens de chauffage 8 est maximale.

Toutefois, lors de cette phase de montée en température, il existe une étape de réduction de la puissance des moyens de chauffage lorsque la différence T4 -T5 entre la température du fond du récipient et la température de contenu du récipient est supérieure à une valeur de seuil prédéterminée.

A titre d'exemple, cette valeur de seuil peut être fixée à 10°C.

Dans ce cas, on réduit la puissance délivrée par les moyens de chauffage 8 afin de ne pas attacher le contenu au fond du récipient.

Lorsque cette différence T4 -T5 entre la température de fond T4 du récipient et la température du contenu T5 du récipient est supérieure à une autre valeur de seuil prédéterminée, supérieure à la valeur de seuil précédente, une étape d'émission d'un signal sonore est mise en oeuvre.

Le signal sonore émis est destiné à alerter l'utilisateur sur la nécessité de remuer le contenu du récipient.

A titre d'exemple, cette autre valeur de seuil déclenchant l'émission d'un signal d'avertissement peut être fixée à 20°C.

Lorsque la température T4 du fond du récipient dépasse la température de consigne Tc, on passe dans une phase de régulation permettant de maintenir le fond du récipient et son contenu à la température de consigne préfixée Tc.

Dans cette étape de régulation, les moyens de chauffage sont contrôlés à partir de la régulation de la valeur de la température T4 de fond du récipient à la valeur de consigne acquise Tc.

Cette régulation de la valeur de la température de fond T4 autour de la valeur de consigne Tc peut être réalisée de manière classique à partir de la valeur de cette température T4 et de sa dérivée, selon un mode de régulation du type PID (Proportionnel Intégral Dérivé).

Parallèlement à cette régulation, on compare la température de fond T4 du récipient à la température T5 de son contenu afin de commander l'extinction des moyens de chauffage 8 lorsque la différence T4 -T5 est négative, c'est-à-dire lorsque la température du contenu du récipient devient plus élevée que la température du fond du récipient, et par là-même dépasse la valeur de consigne prédéterminée.

Ainsi, cette double surveillance lors de la régulation permet de s'assurer que le fond du récipient et son contenu sont bien maintenus à la température de consigne désirée.

En outre, lors de cette étape de régulation, si la différence T4 -T5, entre la température de fond T4 du récipient et la température de son contenu T5 est supérieure à une valeur de seuil prédéterminée, une étape d'émission d'un signal d'avertissement est mise en oeuvre.

Comme précédemment, ce signal d'avertissement est de préférence un signal sonore permettant d'indiquer à l'utilisateur la nécessité de remuer le contenu afin d'éviter tout attachement de celui-ci au niveau du fond du récipient.

A titre d'exemple, la valeur de seuil prédéterminée lors de cette étape de régulation peut être de l'ordre de 15°C.

### Exemple 2 : fonction "frire"

A cette fonction "frire" est associée une température de consigne Tc de l'ordre de 150°C.

Comme précédemment, on peut distinguer une phase de montée en température suivie d'une phase de régulation autour de la température de consigne Tc prédéterminée.

Lors de la phase de montée en température, la puissance délivrée par les moyens de chauffage 8 est maximale tant que la température du fond T4 du récipient est inférieure à la valeur consigne Tc acquise.

Contrairement à l'exemple de réalisation décrit précédemment, il n'existe pas dans ce mode de réalisation une étape de réduction de la puissance du moyen de chauffage ou une étape d'émission d'un signal d'avertissement lorsque la différence T4 -T5 entre la température de fond T4 et la température du contenu T5 devient supérieure à une valeur de seuil.

En effet, lors de la mise en oeuvre de cette fonction "frire" le contenu du récipient est typiquement de l'huile qui peut être montée jusqu'à la température de 150°C sans risque de brûlure ou d'attachement au fond du récipient.

Lorsque la température du fond T4 atteind ou dépasse la valeur de consigne Tc, le procédé d'asservissement se poursuit par une phase de régulation dans laquelle les moyens de chauffage 8 sont contrôlés à partir de la régulation de la valeur de la température de fond T4 du récipient à la valeur de consigne acquise Tc.

Comme précédemment, cette régulation peut être du type PID.

En outre, l'extinction des moyens de chauffage est commandée lorsque la différence entre cette température de fond T4 du récipient et la température du contenu T5 devient négative, c'est-à-dire que la température du contenu T5 du récipient devient supérieure à la température du fond T4 du récipient.

Ainsi, le procédé d'asservissement conforme à l'invention permet, grâce à l'utilisation des valeurs des températures de fond T4 et de contenu T5, éventuellement de leur dérivé et surtout de leur différence, une maîtrise parfaite de la puissance délivrée par les moyens de chauffage 8 pour obtenir le résultat de cuisson escompté, sans risque de surchauffe du contenu du récipient 7.

Ainsi, grâce à la mesure de la température moyenne T5 du contenu du récipient et à la mesure dynamique et rapide de la température du fond T5 du récipient, il est possible de réaliser des fonctions culinaires standards, en maîtrisant parfaitement la température du fond du récipient et de son contenu afin d'éviter toute brûlure ou attachement de celui-ci.

En outre, l'émission d'un signal d'avertissement, de préférence un signal sonore, permet de signaler à l'utilisateur la nécessité de remuer le contenu afin d'homogénéiser la température dans le récipient.

On remarquera que l'ustensile de cuisine conforme à l'invention est particulièrement bien adapté pour permettre à l'utilisateur de remuer le contenu dès lors qu'il se présente sous la forme d'une cuillère ou d'une fourchette telle qu'illustrée aux figures 3 et 4.

Ce procédé d'asservissement et le dispositif d'asservissement 10 adapté à mettre en oeuvre ce procédé peuvent être intégrés à tout type de table de cuisson à commande électronique des moyens de chauffage d'un récipient.

En particulier, ce dispositif d'asservissement peut être intégré à une table à induction, par exemple à clavier sensitif, à une table à foyer radiant ou halogène à contrôle électronique, ou encore dans une table à gaz dont la puissance peut être réglée grâce à une vanne modulant le débit de gaz, cette vanne étant commandée électroniquement.

Bien entendu, de nombreuses modifications peuvent être apportées à l'exemple de réalisation décrit précédemment sans sortir du cadre de l'invention.

Ainsi, le signal d'avertissement destiné à alerter l'utilisateur sur la nécessité de remuer le contenu du récipient peut être un signal visuel, tel que par exemple l'affichage du terme "remuer" sur un écran intégré dans le plan de la table de cuisson.

## Revendications

1. Ustensile de cuisine destiné à être introduit dans un récipient de cuisson (7), comportant des moyens de mesure de température (4, 5) et des moyens de transmission (2) d'une mesure de température à un dispositif d'asservissement (10) de moyens de chauffage (8) d'un appareil de cuisson (9), **caractérisé en ce que** les moyens de mesure de température comprennent au moins deux capteurs de température, un premier capteur de température (4) étant disposé à une extrémité (1a) de l'ustensile de cuisine adaptée à venir en contact avec le fond du récipient (7) et un second capteur de température (5) étant disposé à distance de ladite extrémité (1a).

2. Ustensile de cuisine conforme à la revendication 1, **caractérisé en ce que** ledit second capteur de température (5) est adapté à mesurer une température moyenne d'un contenu du récipient de cuisson (7).

3. Ustensile de cuisine conforme à l'une des revendications 1 ou 2, **caractérisé en ce qu**'il comprend une graduation (6) disposée au-delà du second capteur de température (5).

4. Ustensile de cuisine conforme à l'une des revendications 1 à 3, **caractérisé en ce qu**'il est constitué d'une cuillère, un premier capteur de température (4) étant disposé à une extrémité (1a) de la cuillère adaptée à venir en contact avec le fond du récipient et un second capteur de température (5) étant disposé entre ladite extrémité (1a) et le manche (1) de la cuillère.

5. Ustensile de cuisine conforme à l'une des revendications 1 à 3, **caractérisé en ce qu**'il est constitué d'une fourchette, un premier capteur de température (4) étant disposé à une extrémité (1a) d'une dent de ladite fourchette et un second capteur de température (5) étant disposé entre ladite extrémité (1a) et le manche (1) de la fourchette.

6. Procédé d'asservissement de moyens de chauffage (8) d'un appareil de cuisson (9), lesdits moyens de chauffage (8) étant adaptés à chauffer le contenu d'un récipient de cuisson (7), **caractérisé en ce qu**'il comprend les étapes suivantes :
- réception d'une mesure de température du fond (T4) d'un récipient ;
- réception d'une mesure de température du contenu (T5) d'un récipient ;
- acquisition d'une température de consigne (Tc) ; et
- régulation des moyens de chauffage (8) en fonction de ladite température de consigne (Tc), de la mesure de température du fond (T4) d'un récipient, de la mesure de température du contenu (T5) d'un récipient et de la différence (T4 - T5) entre la température de fond du récipient et la température du contenu du récipient (7).

7. Procédé d'asservissement conforme à la revendication 6, **caractérisé en ce qu**'à l'étape de régulation, les moyens de chauffage (8) sont contrôlés à partir de la régulation de la valeur de la température de fond (T4) du récipient à la valeur de consigne acquise (Tc) et en ce que l'extinction des moyens de chauffage (8) est commandée lorsque la différence (T4 - T5) entre ladite température de fond du récipient et ladite température du contenu du récipient est négative.

8. Procédé d'asservissement conforme à l'une des revendications 6 ou 7, **caractérisé en ce qu**'à l'étape de régulation, lorsque ladite différence (T4 - T5) entre la température de fond du récipient (7) et la température du contenu du récipient est supérieure à une valeur de seuil prédéterminée, une étape d'émission d'un signal d'avertissement est mise en oeuvre.

9. Procédé d'asservissement conforme à l'une des revendications 6 à 8, **caractérisé en ce qu**'il comprend en outre une phase de montée en température du fond du récipient (7) à ladite valeur de consigne acquise (Tc), cette phase de montée en température comportant une étape de réduction de la puissance des moyens de chauffage (8) lorsque ladite différence (T4 - T5) entre la température de fond du récipient et la température du contenu du récipient est supérieure à une seconde valeur de seuil.

10. Procédé d'asservissement conforme à la revendication 9, **caractérisé en ce que** la phase de montée en température comporte en outre une étape d'émission d'un signal d'avertissement lorsque ladite différence (T4 - T5) entre la température de fond du récipient et la température du contenu du récipient est supérieure à une troisième valeur de seuil.

11. Procédé d'asservissement conforme à la revendication 10, **caractérisé en ce que** ladite troisième valeur de seuil est supérieure à ladite deuxième valeur de seuil.

12. Procédé d'asservissement conforme à l'une des revendications 8 ou 10, **caractérisé en ce que** ledit signal d'avertissement est un signal sonore.

13. Dispositif d'asservissement de moyens de chauffage (8) d'un appareil de cuisson (9), adapté à coopérer avec un ustensile de cuisine conforme à l'une des revendications 1 à 5, **caractérisé en ce qu'**il comprend des moyens de réception (11) de mesures de température (T4, T5), des moyens d'acquisition (12) d'une température de consigne (Tc) et des moyens de régulation (14) adaptés à contrôler les moyens de chauffage (8) en fonction de la température de consigne (Tc), d'une mesure de température du fond (T4) d'un récipient (7), d'une mesure de température du contenu (T5) d'un récipient (7) et de la différence (T4 - T5) entre ladite température de fond du récipient et ladite température du contenu du récipient.

14. Dispositif d'asservissement conforme à la revendication 13, **caractérisé en ce qu**'il comprend en outre des moyens d'avertissement (15), tels que des moyens d'émission d'un signal sonore, adaptés à être commandés par les moyens de régulation (14) lorsque ladite différence (T4 - T5) entre la température du fond du récipient et la température du contenu du récipient est supérieure à une valeur de seuil prédéterminée.

15. Table de cuisson domestique à commande électronique des moyens de chauffage (8) d'un récipient (7), **caractérisée en ce qu'**elle comprend un dispositif d'asservissement (10) conforme à l'une des revendications 13 ou 14.

## Claims

1. Kitchen utensil intended to be introduced into a cooking receptacle (7), comprising temperature measurement means (4, 5) and means (2) of transmitting a temperature measurement to a device (10) for controlling heating means (8) of a cooking appliance (9), **characterised in that** the temperature measurement means comprise at least two temperature sensors, a first temperature sensor (4) being disposed at one end (1 a) of the kitchen utensil adapted to come into contact with the bottom of the receptacle (7) and a second temperature sensor (5) being disposed at a distance from the said end (1a).

2. Kitchen utensil according to claim 1, **characterised in that** the said second temperature sensor (5) is adapted to measure a mean temperature of a content of the cooking receptacle (7).

3. Kitchen utensil according to one of claims 1 or 2, **characterised in that** it comprises a graduation (6) disposed beyond the second temperature sensor (5).

4. Kitchen utensil according to one of claims 1 to 3, **characterised in that** it consists of a spoon, a first temperature sensor (4) being disposed at one end (1 a) of the spoon adapted to come into contact with the bottom of the receptacle and a second temperature sensor (5) being disposed between the said end (1 a) and the handle (1) of the spoon.

5. Kitchen utensil according to one of claims 1 to 3, **characterised in that** it consists of a fork, a first temperature sensor (4) being disposed at one end (1a) of a prong of the said fork and a second temperature sensor (5) being disposed between the said end (1a) and the handle (1) of the fork.

6. Method of controlling heating means (8) of a cooking appliance (9), the said heating means (8) being adapted to heat the content of a cooking receptacle (7), **characterised in that** it comprises the following steps:
- receiving a temperature measurement of the bottom (T4) of a receptacle;
- receiving a temperature measurement of the content (T5) of a receptacle;
- acquiring a set temperature (Tc); and
- regulating the heating means (8) according to the said set temperature (Tc), the temperature measurement of the bottom (T4) of a receptacle, the temperature measurement of the content (T5) of a receptacle and the difference (T4 - T5) between the bottom temperature of the receptacle and the temperature of the content of the receptacle (7).

7. Control method according to claim 6, **characterised in that**, at the regulation step, the heating means (8) are controlled from the regulation of the value of the bottom temperature (T4) of the receptacle at the set value acquired (Tc) and **in that** the switching off of the heating means (8) is demanded when the difference (T4 - T5) between the said bottom temperature of the receptacle and the said temperature of the content of the receptacle is negative.

8. Control method according to one of claims 6 or 7, **characterised in that**, at the regulation step, when the said difference (T4 - T5) between the bottom temperature of the receptacle (7) and the temperature of the content of the receptacle is greater than a predetermined threshold value, a step of sending a warning signal is implemented.

9. Control method according to one of claims 6 to 8, **characterised in that** it also comprises a phase of rise in temperature of the bottom of the receptacle (7) to the said set value acquired (Tc), this temperature rise phase comprising a step of reducing the power of the heating means (8) when the said difference (T4 - T5) between the bottom temperature of the receptacle and the temperature of the content of the receptacle is greater than a second threshold value.

10. Control method according to claim 9, **characterised in that** the temperature rise phase also comprises a step of sending a warning signal when the said difference (T4 - T5) between the bottom temperature of the receptacle and the temperature of the content of the receptacle is greater than a third threshold value.

11. Control method according to claim 10, **characterised in that** the said third threshold value is higher than the said second threshold value.

12. Control method according to one of claims 8 or 10, **characterised in that** the said warning signal is an audible signal.

13. Device for controlling heating means (8) of a cooking appliance (9), adapted to cooperate with a kitchen utensil according to one of claims 1 to 5, **characterised in that** it comprises means (11) of receiving temperature measurements (T4, T5), means (12) of acquiring a set temperature (Tc) and regulation means (14) adapted to control the heating means (8) according to the set temperature (Tc), a temperature measurement of the bottom (T4) of a receptacle (7), a temperature measurement of the content (T5) of a receptacle (7) and the difference (T4 - T5) between the said bottom temperature of the receptacle and the said temperature of the content of the receptacle.

14. Control device according to claim 13, **characterised in that** it also comprises control means (15), such as means of emitting an audible signal, adapted to be controlled by the regulation means (14) when the said difference (T4 - T5) between the temperature of the bottom of the receptacle and the temperature of the content of the receptacle is above a predetermined threshold value.

15. Domestic cooking hob with electronic control of the means (8) of heating a receptacle (7), **characterised in that** it comprises a control device (10) according to one of claims 13 or 14.

## Patentansprüche

1. Küchenutensil zum Einführen in ein Kochgefäß (7), mit Mitteln zum Messen der Temperatur (4, 5) und Mitteln zum Übertragen (2) einer Temperaturmessung an eine Einrichtung zum Regeln (10) von Heizmitteln (8) eines Kochgeräts (9), **dadurch gekennzeichnet, dass** die Temperaturmessungsmittel mindestens zwei Temperatursensoren aufweisen, wobei ein erster Temperatursensor (4) an einem Ende (1a) des Küchenutensils, das dazu vorgesehen ist, mit dem Boden des Behälters (7) in Berührung zu kommen, und ein zweiter Temperatursensor (5) vom Ende (1 a) beabstandet angeordnet ist.

2. Küchenutensil nach Anspruch 1, **dadurch gekennzeichnet, dass** der zweite Temperatursensor (5) dazu vorgesehen ist, eine Durchschnittstemperatur eines Inhalts des Kochbehälters (7) zu messen.

3. Küchenutensil nach einem der Ansprüche 1 oder 2, **dadurch gekennzeichnet, dass** es eine über dem zweiten Temperatursensor (5) angeordnete Strichteilung (6) aufweist.

4. Küchenutensil nach einem der Ansprüche 1 bis 3, **dadurch gekennzeichnet, dass** es aus einem Löffel besteht, wobei ein erster Temperatursensor (4) an einem Ende (1 a) des Löffels, das dazu vorgesehen ist, mit dem Boden des Behälters (7) in Berührung zu kommen, und ein zweiter Temperatursensor (5) zwischen dem Ende (1a) und dem Stiel (1) des Löffels angeordnet ist.

5. Küchenutensil nach einem der Ansprüche 1 bis 3, **dadurch gekennzeichnet, dass** es aus einer Gabel besteht, wobei ein erster Temperatursensor (4) an einem Ende (1 a) eines Zinkens der Gabel und ein zweiter Temperatursensor (5) zwischen dem Ende (1a) und dem Griff (1) der Gabel angeordnet ist.

6. Verfahren zum Regeln von Heizmitteln (8) eines Kochgeräts (9), wobei die Heizmittel (8) dazu vorgesehen sind, den Inhalt des Kochbehälters (7) zu heizen, **dadurch gekennzeichnet, dass** es folgende Schritte aufweist:
- Aufnahme einer Messung der Temperatur (T4) des Bodens eines Behälters;
- Aufnahme einer Messung der Temperatur (T5) des Inhalts eines Behälters;
- Erhalten einer Solltemperatur (Tc); und
- Regelung der Heizmittel (8) in Abhängigkeit von der Solltemperatur (Tc), der Messung der Bodentemperatur (T4) eines Behälters, der Messung der Temperatur des Inhalts (T5) eines Behälters und von dem Unterschied (T4-T5) zwischen der Temperatur des Bodens des Behälters und der Temperatur des Inhalts des Behälters (7).

7. Regelungsverfahren nach Anspruch 6, **dadurch gekennzeichnet, dass** beim Schritt der Regelung die Heizmittel (8) in Abhängigkeit von der Regelung des Werts der Bodentemperatur (T4) des Behälters auf den erhaltenen Sollwert (Tc) geregelt werden und dass das Abschalten der Heizmittel (8) gesteuert wird, wenn die Differenz (T4 - T5) zwischen der Bodentemperatur des Behälters und der Temperatur des Inhalts des Behälters negativ ist.

8. Regelungsverfahren nach einem der Ansprüche 6 oder 7, **dadurch gekennzeichnet, dass** beim Schritt der Regelung ein Schritt des Sendens eines Warnsignals ausgeführt wird, wenn der Unterschied (T4 - T5) zwischen der Temperatur des Bodens des Behälters und der Temperatur des Inhalts des Behälters (7) höher als ein vorgegebener Schwellenwert ist.

9. Regelungsverfahren nach einem der Ansprüche 6 bis 8, **dadurch gekennzeichnet, dass** es zudem eine Phase des Anstiegs der Bodentemperatur des Behälters (7) auf den erhaltenen Sollwert (Tc) umfasst, wobei diese Phase des Temperaturanstiegs einen Schritt der Verringerung der Leistung der Heizmittel (8) aufweist, wenn der Unterschied (T4-T5) zwischen der Temperatur des Bodens des Behälters und der Temperatur des Inhalts des Behälters (7) höher als ein zweiter Schwellenwert ist.

10. Regelungsverfahren nach Anspruch 9, **dadurch gekennzeichnet, dass** die Phase des Anstiegs der Temperatur zudem einen Schritt des Sendens eines Warnsignals umfasst, wenn der Unterschied (T4 - T5) zwischen der Temperatur des Bodens des Behälters und der Temperatur des Inhalts des Behälters (7) höher als ein dritter Schwellenwert ist.

11. Regelungsverfahren nach Anspruch 10, **dadurch gekennzeichnet, dass** der dritte Schwellenwert höher ist als der zweite Schwellenwert.

12. Regelungsverfahren nach einem der Ansprüche 8 oder 10, **dadurch gekennzeichnet, dass** das Warnsignal ein Schallsignal ist.

13. Vorrichtung zum Regeln von Heizmitteln (8) eines Kochgeräts (9), die dazu vorgesehen ist, mit einem Küchenutensil nach einem der Ansprüche 1 bis 5 zusammenzuwirken, **dadurch gekennzeichnet, dass** sie Mittel zum Aufnehmen (11) von Temperaturmessungen (T4, T4), Mittel zum Erhalten (12) einer Solltemperatur (Tc) und Regelungsmittel (14) aufweist, die dazu vorgesehen sind, die Heizmittel (8) in Abhängigkeit von der Solltemperatur (Tc), einer Messung der Bodentemperatur (T4) eines Behälters (7), einer Messung der Temperatur des Inhalts (T5) eines Behälters (7) und der Differenz (T4 - T5) zwischen der Bodentemperatur des Behälters und der Temperatur des Inhalts des Behälters zu regeln.

14. Regelungsvorrichtung nach Anspruch 13, **dadurch gekennzeichnet, dass** sie zudem Warnmittel (15) wie Mittel zum Senden eines Schallsignals aufweist, die dazu vorgesehen sind, durch die Regelungsmittel (14) gesteuert zu werden, wenn der Unterschied (T4-T5) zwischen der Temperatur des Bodens des Behälters und der Temperatur des Inhalts des Behälters höher als ein vorgegebener Schwellenwert ist.

15. Haushaltskochplatte mit elektronischer Steuerung der Heizmittel (8) eines Behälters (7), **dadurch gekennzeichnet, dass** sie eine Regelungsvorrichtung (10) nach einem der Ansprüche 13 oder 14 aufweist.
